# EUROPEAN PATENT SPECIFICATION

(11) **EP 4 620 564 B1**
(45) Date of publication and mention of the grant of the patent: **18.03.2026**
(21) Application number: 24217691.5
(22) Date of filing: 05.12.2024
(51) Int. Cl.: B01J 20/26, B01D 15/08, B01J 20/285, C08K 3/16, C08K 5/00, C08K 5/3415

(54) **CHROMATOGRAPHY MEDIA FOR REMOVAL OF POLYPHENOL SUBSTANCES AND PREPARATION METHOD THEREOF**
CHROMATOGRAPHIEMEDIEN ZUR ENTFERNUNG VON POLYPHENOLSUBSTANZEN UND HERSTELLUNGSVERFAHREN DAFÜR
MILIEUX DE CHROMATOGRAPHIE POUR L'ÉLIMINATION DE SUBSTANCES POLYPHÉNOLIQUES ET LEUR PROCÉDÉ DE PRÉPARATION

(30) Priority: 29.12.2023 CN 202311857225
(43) Date of publication of application: 24.09.2025
(73) Proprietor: Sunresin New Materials Co. Ltd., Xi'an, Shaanxi 710076 (CN)
(72) Inventor: LI, Chenhui, XI'AN, 710076 (CN); LI, Yanjun, XI'AN, 710076 (CN); LIU, Long, XI'AN, 710076 (CN); WANG, Kai, XI'AN, 710076 (CN); WANG, Mingxi, XI'AN, 710076 (CN)
(74) Representative: Lavoix

(56) References cited:
- EP-A1- 0 023 322
- US-A- 4 568 706
- US-A1- 2013 139 834

## Description

### TECHNICAL FIELD

The present disclosure relates to the technical field of organic polymer compounds, in particular to chromatography media for the removal of polyphenol substances and a preparation method thereof.

### BACKGROUND

Due to precipitation and aggregation of polyphenol compounds in fermented beverages such as beer, precipitation substances that affect quality of the beverages may be produced during storage. At present, silica hydrogel (SHG) and/or cross-linked polyvinylpyrrolidone particles (PVPP) are mainly added into unstable fermented beverages to remove polyphenol substances. However, although the above method can achieve an effect of removing the polyphenol compounds, recovery is often difficult, mechanical properties are poor, and the fermented beverages cannot be treated at a high flow velocity.

US 2013/0139834 Al discloses chromatography media prepared by suspension polymerisation from an oil phase comprising N-vinyl pyrrolidone, ethylene glycol dimethacrylate as crosslinking agent, benzoxyl peroxide as initiator and toluene as porogen, and adding said oil phase to an aqueous phase comprising polyvinyl alcohol as dispersing agent and water.

### SUMMARY OF THE INVENTION

Therefore, the technical problem to be solved by the present disclosure is to overcome defects of difficult recovery and poor mechanical properties of existing polyphenol substance removal media, so as to provide chromatography media for the removal of polyphenol substances and a preparation method thereof for solving the above problems.

In order to achieve the above objective, the present disclosure provides the following technical solutions:
A method for preparing chromatography media for removal of polyphenol substances includes:
obtaining an aqueous phase by mixing a water-soluble inorganic salt, a dispersing agent and water;
obtaining an oil phase by mixing N-vinyl pyrrolidone, a first crosslinking agent, a second crosslinking agent, a third crosslinking agent, an initiator and a pore-forming agent; and
preparing the chromatography media for the removal of the polyphenol substances by adding the oil phase into the aqueous phase for suspension polymerization; wherein
the first crosslinking agent includes at least one of triallyl isocyanurate and N,N'-methylene bisacrylamide;
the second crosslinking agent includes at least one of N,N'-divinyl imidazolidinone, N,N'-ethylenebisacrylamide, N,N'-divinylethyleneurea, and N,N'-divinylpropyleneurea; and
the third crosslinking agent includes at least one of allyl methacrylate, ethylene glycol diacrylate, ethylene glycol dimethacrylate, and tetraethylene glycol diacrylate.

Preferably, the water-soluble inorganic salt includes at least one of sodium sulfate, sodium chloride, calcium chloride and potassium chloride;
and/or, the dispersing agent includes at least one of gelatin, polyvinyl alcohol, carboxymethyl cellulose, hydroxypropyl methyl cellulose, polyvinylpyrrolidone, and amylum.

Preferably, the initiator includes at least one of benzoyl peroxide, azodiisobutyronitrile, and azobisisoheptonitrile;
and/or, the pore-forming agent includes at least one of toluene, dichloromethane, dichloroethane, butyl acetate, and ethyl acetate.

Preferably, a mass ratio of the water-soluble inorganic salt, the dispersing agent and water is (25-50):(0.1-3):100.

Preferably, a mass ratio of N-vinyl pyrrolidone, the first crosslinking agent, the second crosslinking agent, the third crosslinking agent, the initiator, and the pore-forming agent is 100:(21-36):(11-26):(3-10):(0.7-1.8):(120-125).

Preferably, a volume ratio of the aqueous phase to the oil phase is 1:(3-8).

Preferably, the suspension polymerization is carried out at a temperature ranging from 50°C to 90°C for a time period ranging from 3 hours to 10 hours.

Preferably, stirring treatment is performed after layering of liquid level in the suspension polymerization;
and/or, the suspension polymerization is further followed by extraction with an extractant, water washing, and sieving treatment.

Preferably, a stirring speed of the stirring treatment is in a range from 100 rpm/min to 500 rpm/min;
and/or, the extractant includes at least one of methanol, ethanol, acetone, and dimethoxymethane;
and/or, a particle size of the sieving treatment is in a range from 100 µm to 3,000 µm.

The present disclosure further provides chromatography media for the removal of polyphenol substances, and the chromatography media is prepared through the above method for preparing chromatography media for the removal of polyphenol substances.

The technical solution of the present disclosure has the following advantages:
1. The method for preparing the chromatography media for the removal of the polyphenol substances includes: obtaining the aqueous phase by mixing the water-soluble inorganic salt, the dispersing agent and the water; obtaining the oil phase by mixing N-vinyl pyrrolidone, the first crosslinking agent, the second crosslinking agent, the third crosslinking agent, the initiator and the pore-forming agent; and preparing the chromatography media for the removal of the polyphenol substances by adding the oil phase into the aqueous phase for suspension polymerization, wherein the first crosslinking agent includes at least one of triallyl isocyanurate and N,N'-methylene bisacrylamide; the second crosslinking agent includes at least one of N,N'-divinyl imidazolidinone, N,N'-ethylenebisacrylamide, N, N'-divinylethyleneurea, and N, N'-divinylpropyleneurea; and the third crosslinking agent includes at least one of allyl methacrylate, ethylene glycol diacrylate, ethylene glycol dimethacrylate, and tetraethylene glycol diacrylate. In the prior art, cross-linked polyvinylpyrrolidone particles (PVPP) are usually produced using a single crosslinking agent, but the prepared microspheres have rough surfaces, and poor pore channel distribution and strength, resulting in low pressure-resistant flow velocity. However, the present disclosure uses a forward suspension polymerization method and three crosslinking agents with different activities to prepare the chromatography media for the removal of the polyphenol substances. The chromatography media has a smooth and uniform surface, uniform pore channel distribution, and better strength than that of the single crosslinking agent (the pressure-resistant flow velocity may reflect a shape and strength of the spheres, and an adsorption rate and regeneration amount may reflect the pore channel distribution). The chromatography media has effective binding ability for polyphenol substances in fermented beverages, specifically, an adsorption rate of the polyphenol substances is in a range from 40% to 45%. And after recovery, the chromatography media can be reused for adsorbing the polyphenol substances, a recycle loss rate is less than 1%, a recovery adsorption decrease rate is less than 2%, and cycling performance is good, thereby effectively reducing production costs and minimizing generation of solid waste; and
   in addition, the chromatography media prepared by the present disclosure is high in mechanical properties. In an XK16/40 column, a linear flow rate of the chromatography media of the present disclosure may reach 1,000 cm/h, and a pressure resistance is greater than 1 Mpa.
2. In the method for preparing the chromatography media for the removal of the polyphenol substances in the present disclosure, crosslinking agents without benzene substances are used, and the usage amount is greatly reduced. The matrix of the microspheres is polyvinylpyrrolidone, which improves separation efficiency of the microspheres for the removal of the polyphenol substances and is more environmentally friendly.
3. In the method for preparing the chromatography media for the removal of the polyphenol substances in the present disclosure, a large amount of inorganic salt solution is added into the aqueous phase to reduce the solubility of N-vinyl pyrrolidone in the aqueous phase, and stable PVPP microspheres are prepared, which solves the preparation problem of N-vinyl pyrrolidone microspheres as the matrix and applies them to the removal of the polyphenol substances in fermented beverages, while also solving of their non-reusability.

### DETAILED DESCRIPTION

The following embodiments are provided for a better understanding of the present disclosure, are not limited to the optimal implementation described, and do not limit the content and scope of protection of the present disclosure.

Specific experimental steps or conditions which are not specified in the embodiments may follow operations of conditions of conventional experimental steps described in the literature in the art. Reagents or instruments used without specifying the manufacturers are conventional reagent products that can be purchased form the market.

### Example 1

This embodiment provides a method for preparing chromatography media for removal of polyphenol substances, including the following steps:
1) 100 g of sodium chloride and 12 g of polyvinylpyrrolidone K90 were added into 1200 g of water, and a mixture was stirred and dissolved at 45°C to obtain an aqueous phase;
2) 196 g of N-vinyl pyrrolidone, 43.2 g of triallyl isocyanurate, 29.4 g of N,N'-divinyl imidazolidinone, 5.9 g of allyl methacrylate, 1.44 g of azodiisobutyronitrile, 120 g of butyl acetate, and 120 g of toluene were stirred and mixed to obtain an oil phase; and
3) the aqueous phase from step 1) and the oil phase from step 2) were weighed in a volume ratio of the aqueous phase to the oil phase of 1:5, the oil phase was added into the aqueous phase, after liquid stratification, stirring was started to form oil-in-water reverse suspension polymerization beads, a stirring speed was 200 rpm/min, then suspension polymerization was carried out at 80°C for 5 hours, after a reaction is complete, a reaction product was poured into ethanol for soaking, so as to remove residual monomers and other solvents, water was added to detect that the effluent ethanol has no white turbidity, and then the spherical chromatography media ranging from 100 µm to 300 µm was obtained after water washing and sieving.

### Example 2

This embodiment provides a method for preparing chromatography media for removal of polyphenol substances, including the following steps:
1) 150 g of sodium chloride and 14 g of polyvinylpyrrolidone K60 were added into 1,200 g of water, and a mixture was stirred and dissolved at 45°C to obtain an aqueous phase;
2) 200 g of N-vinyl pyrrolidone, 52 g of N,N'-methylene bisacrylamide, 22 g of N,N'-ethylenebisacrylamide, 20 g of ethylene glycol diacrylate, 2.88 g of azobisisoheptonitrile, and 240 g of ethyl acetate were stirred and mixed to obtain an oil phase; and
3) the aqueous phase from step 1) and the oil phase from step 2) were weighed in a volume ratio of the aqueous phase to the oil phase of 1:8, the oil phase was added into the aqueous phase, after liquid stratification, stirring was started to form oil-in-water reverse suspension polymerization beads, a stirring speed was 250 rpm/min, then suspension polymerization was carried out at 80°C for 5 hours, after a reaction is complete, a reaction product was poured into ethanol for soaking, so as to remove residual monomers and other solvents, water was added to detect that the effluent ethanol has no white turbidity, and then the spherical chromatography media ranging from 110 µm to 320 µm was obtained after water washing and sieving.

### Example 3

This embodiment provides a method for preparing chromatography media for removal of polyphenol substances, including the following steps:
1) 150 g of calcium chloride, 12 g of polyvinyl alcohol and 12 g of gelatin were added into 1200 g of water, and a mixture was stirred and dissolved at 45°C to obtain an aqueous phase;
2) 220 g of N-vinyl pyrrolidone, 66 g of triallyl isocyanurate, 35.2 g of N, N'-divinylpropyleneurea, 8.8 g of tetraethylene glycol diacrylate, 3.8 g of benzoyl peroxide, 120 g of dichloromethane, and 150 g of toluene were stirred and mixed to obtain an oil phase; and
3) the aqueous phase from step 1) and the oil phase from step 2) were weighed in a volume ratio of the aqueous phase to the oil phase of 1:3, the oil phase was added into the aqueous phase, after liquid stratification , stirring was started to form oil-in-water reverse suspension polymerization beads, a stirring speed was 200 rpm/min, then suspension polymerization was carried out at 80°C for 5 hours, after a reaction is complete, a reaction product was poured into ethanol for soaking, so as to remove residual monomers and other solvents, water was added to detect that the effluent ethanol has no white turbidity, and then the spherical chromatography media ranging from 200 µm to 500 µm was obtained after water washing and sieving.

### Example 4

This embodiment provides a method for preparing chromatography media for removal of polyphenol substances, including the following steps:
1) 300 g of sodium sulfate and 1.2 g of carboxymethyl cellulose were added into 1,200 g of water, and a mixture was stirred and dissolved at 45°C to obtain an aqueous phase;
2) 200 g of N-vinyl pyrrolidone, 42 g of triallyl isocyanurate, 52 g of N, N'-divinylethyleneurea, 6 g of ethylene glycol dimethacrylate, 1.4 g of azodiisobutyronitrile, and 250 g of dichloroethane were stirred and mixed to obtain an oil phase; and
3) the aqueous phase from step 1) and the oil phase from step 2) were weighed in a volume ratio of the aqueous phase to the oil phase of 1:5, the oil phase was added into the aqueous phase, after liquid stratification, stirring was started to form oil-in-water reverse suspension polymerization beads, a stirring speed was 100 rpm/min, then suspension polymerization was carried out at 50°C for 10 hours, after a reaction is complete, a reaction product was poured into acetone for soaking, so as to remove residual monomers and other solvents, water was added to detect that the effluent acetone has no white turbidity, and then the spherical chromatography media ranging from 100 µm to 300 µm was obtained after water washing and sieving.

### Example 5

This embodiment provides a method for preparing chromatography media for removal of polyphenol substances, including the following steps:
1) 600 g of potassium chloride and 36 g of hydroxypropyl methyl cellulose were added into 1,200 g of water, and a mixture was stirred and dissolved at 45°C to obtain an aqueous phase;
2) 200 g of N-vinyl pyrrolidone, 72 g of triallyl isocyanurate, 22 g of N,N'-divinyl imidazolidinone, 6 g of allyl methacrylate, 3.6 g of azodiisobutyronitrile, and 240 g of butyl acetate were stirred and mixed to obtain an oil phase; and
3) the aqueous phase from step 1) and the oil phase from step 2) were weighed in a volume ratio of the aqueous phase to the oil phase of 1:5, the oil phase was added into the aqueous phase, after liquid stratification, stirring was started to form oil-in-water reverse suspension polymerization beads, a stirring speed was 500 rpm/min, then suspension polymerization was carried out at 90°C for 3 hours, after a reaction is complete, a reaction product was poured into dimethoxymethane for soaking, so as to remove residual monomers and other solvents, water was added to detect that the effluent dimethoxymethane has no white turbidity, and then the spherical chromatography media ranging from 100 µm to 300 µm was obtained after water washing and sieving.

### Comparative Example 1

The difference between this comparative example and Example 1 is that only 78.5 g of triallyl isocyanurate was added as a crosslinking agent, and other conditions are the same as Example 1.

### Comparative Example 2

The difference between this comparative example and Example 1 is that 43.2 g of triallyl isocyanurate and 35.3 g of N,N'-divinyl imidazolidinone were added as crosslinking agents, and other conditions are the same as Example 1.

### Comparative Example 3

The difference between this comparative example and Example 1 is that 43.2 g of triallyl isocyanurate and 35.3 g of allyl methacrylate were added as crosslinking agents, and other conditions are the same as Example 1.

### Comparative Example 4

The difference between this comparative example and Example 1 is that 43.2 g of N,N'-divinyl imidazolidinone and 35.3 g of allyl methacrylate were added as crosslinking agents, and other conditions are the same as Example 1.

### Test Example 1

A pressure-resistant flow velocity and an adsorption capacity of the chromatography media prepared in Examples 1-5 and Comparative Examples 1-4 were tested. The pressure-resistant flow velocity testing was carried out by using a GE AKTA chromatography system, an XK16/40 column, and 0.10 mol/L NaCl. AKTA programming was used for pressure flow velocity testing, and the testing results are shown in Table 1 below. The adsorption capacity testing was carried out by using a GE AKTA chromatography system; a 1 mL chromatography column; a detection wavelength: 280 nm; a mobile phase: 0.1% phosphoric acid aqueous solution: acetonitrile=85:15; a flow rate: 1,000 mL/min; a column temperature: 25°C, a maximum ultraviolet absorption value was recorded, and the absorption capacity thereof was calculated. The testing results are shown in Table 2 below.

**Table 1**

| | | | | | | | | | |
|---|---|---|---|---|---|---|---|---|---|
| Example 1 | Linear flow rate (cm/h) | 360 | 480 | 600 | 720 | 840 | 960 | 1080 | 1200 |
| | PreC (Mpa) | 0.413 | 0.653 | 0.734 | 0.853 | 0.913 | 1.031 | 1.132 | 1.213 |
| | DeltaC (Mpa) | 0.397 | 0.531 | 0.621 | 0.765 | 0.813 | 0.919 | 1.043 | 1.134 |
| Example 2 | Linear flow rate (cm/h) | 350 | 470 | 590 | 710 | 820 | 930 | 1040 | 1100 |
| | PreC (Mpa) | 0.403 | 0.633 | 0.714 | 0.833 | 0.903 | 1.001 | 1.032 | 1.113 |
| | DeltaC (Mpa) | 0.374 | 0.521 | 0.611 | 0.795 | 0.863 | 0.909 | 1.003 | 1.004 |
| Example 3 | Linear flow rate (cm/h) | 450 | 510 | 620 | 760 | 840 | 970 | 1080 | 1180 |
| | PreC (Mpa) | 0.502 | 0.687 | 0.754 | 0.813 | 0.893 | 0.991 | 1.132 | 1.213 |
| | DeltaC (Mpa) | 0.434 | 0.621 | 0.699 | 0.805 | 0.883 | 0.919 | 1.033 | 1.104 |
| Example 4 | Linear flow rate (cm/h) | 460 | 520 | 630 | 770 | 850 | 980 | 1090 | 1190 |
| | PreC (Mpa) | 0.472 | 0.657 | 0.724 | 0.783 | 0.863 | 0.961 | 1.102 | 1.183 |
| | DeltaC (Mpa) | 0.214 | 0.401 | 0.479 | 0.585 | 0.663 | 0.699 | 0.813 | 0.884 |
| Example 5 | Linear flow rate (cm/h) | 370 | 490 | 610 | 730 | 850 | 970 | 1090 | 1210 |
| | PreC (Mpa) | 0.383 | 0.623 | 0.704 | 0.823 | 0.883 | 1.001 | 1.102 | 1.183 |
| | DeltaC (Mpa) | 0.277 | 0.311 | 0.401 | 0.545 | 0.593 | 0.699 | 0.823 | 0.914 |
| Comparative Example 1 | Linear flow rate (cm/h) | 60 | 180 | 300 | 420 | 540 | 660 | 780 | 900 |
| | PreC (Mpa) | 0.543 | 0.783 | 0.864 | 0.983 | 1.043 | 1.161 | 1.262 | 1.343 |
| | DeltaC (Mpa) | 0.517 | 0.651 | 0.741 | 0.885 | 0.933 | 1.039 | 1.163 | 1.254 |
| Comparative Example 2 | Linear flow rate (cm/h) | 40 | 160 | 280 | 400 | 520 | 640 | 760 | 880 |
| | PreC (Mpa) | 0.743 | 0.983 | 1.064 | 1.183 | 1.243 | 1.361 | 1.462 | 1.543 |
| | DeltaC (Mpa) | 0.717 | 0.851 | 0.941 | 1.085 | 1.133 | 1.239 | 1.363 | 1.454 |
| Comparative Example 3 | Linear flow rate (cm/h) | 240 | 360 | 480 | 600 | 720 | 840 | 860 | 980 |
| | PreC (Mpa) | 0.943 | 1.183 | 1.264 | 1.383 | 1.443 | 1.561 | 1.662 | 1.743 |
| | DeltaC (Mpa) | 0.849 | 0.983 | 1.073 | 1.217 | 1.265 | 1.371 | 1.495 | 1.586 |
| Comparative Example 4 | Linear flow rate (cm/h) | 40 | 160 | 280 | 400 | 520 | 640 | 660 | 780 |
| | PreC (Mpa) | 0.966 | 1.206 | 1.287 | 1.406 | 1.466 | 1.584 | 1.685 | 1.766 |
| | DeltaC (Mpa) | 0.859 | 0.993 | 1.083 | 1.227 | 1.275 | 1.381 | 1.505 | 1.596 |

**Table 2**

| | | First cycle | Second cycle | Third cycle | Fourth cycle | Fifth cycle |
|---|---|---|---|---|---|---|
| Example 1 | Flowthrough amount / mg | 64.4 | 66.4 | 66.5 | 66.7 | 66.7 |
| | Adsorption capacity / mg | 53.3 | 52.1 | 51.9 | 51.9 | 52 |
| | Regeneration amount / mg | 53.0 | 52 | 51.5 | 51.4 | 51.8 |
| | Adsorption rate | 45.20% | 44.00% | 43.80% | 43.80% | 43.80% |
| Example 2 | Flowthrough amount / mg | 61.4 | 61.8 | 61.2 | 61.3 | 61.2 |
| | Adsorption capacity / mg | 49.1 | 47.6 | 46.6 | 46.4 | 46.5 |
| | Regeneration amount / mg | 48.7 | 46.5 | 46.1 | 46.3 | 46.4 |
| | Adsorption rate | 44.40% | 43.50% | 43.20% | 43.10% | 43.20% |
| Example 3 | Flowthrough amount / mg | 63.60 | 63.90 | 63.10 | 63.00 | 63.20 |
| | Adsorption capacity / mg | 51.10 | 50.30 | 46.90 | 46.70 | 46.80 |
| | Regeneration amount / mg | 50.80 | 50.00 | 46.10 | 46.30 | 46.40 |
| | Adsorption rate | 44.60% | 44.00% | 42.60% | 42.60% | 42.50% |
| Example 4 | Flowthrough amount / mg | 61.4 | 62.4 | 62.5 | 62.7 | 62.7 |
| | Adsorption capacity / mg | 52.3 | 52.1 | 51.9 | 51.9 | 52 |
| | Regeneration amount / mg | 51.1 | 51.4 | 50.3 | 50.1 | 50.15 |
| | Adsorption rate | 46.00% | 45.50% | 45.37% | 45.29% | 45.34% |
| Example 5 | Flowthrough amount / mg | 64.4 | 66.4 | 66.5 | 66.7 | 66.7 |
| | Adsorption capacity / mg | 51.3 | 51.1 | 50.9 | 50.9 | 51 |
| | Regeneration amount / mg | 53.1 | 52.4 | 51.3 | 51.1 | 51.15 |
| | Adsorption rate | 44.34% | 43.49% | 43.36% | 43.28% | 43.33% |
| Comparative Example 1 | Flowthrough amount / mg | 61.1 | 62.1 | 62.1 | 62.3 | 62.3 |
| | Adsorption capacity / mg | 32.3 | 32.1 | 31.9 | 31.9 | 32 |
| | Regeneration amount / mg | 31.1 | 31.4 | 30.3 | 30.1 | 30.15 |
| | Adsorption rate | 34.58% | 34.08% | 33.94% | 33.86% | 33.93% |
| Comparative Example 2 | Flowthrough amount / mg | 81.1 | 82.1 | 82.1 | 82.2 | 82.2 |
| | Adsorption capacity / mg | 12.3 | 12.1 | 11.9 | 11.9 | 12 |
| | Regeneration amount / mg | 11.1 | 11.4 | 10.3 | 10.1 | 10.1 |
| | Adsorption rate | 13.17% | 12.85% | 12.66% | 12.65% | 12.74% |
| Comparative Example 3 | Flowthrough amount / mg | 71.1 | 72.1 | 72.1 | 72.2 | 72.2 |
| | Adsorption capacity / mg | 14.3 | 14.1 | 13.9 | 13.9 | 14 |
| | Regeneration amount / mg | 13.1 | 13.4 | 12.3 | 12.1 | 12.1 |
| | Adsorption rate | 16.74% | 16.36% | 16.16% | 16.14% | 16.24% |
| Comparative Example 4 | Flowthrough amount / mg | 61.1 | 62.1 | 62.1 | 62.2 | 62.2 |
| | Adsorption capacity / mg | 54.3 | 54.1 | 53.9 | 53.9 | 54 |
| | Regeneration amount / mg | 23.1 | 23.4 | 22.3 | 22.1 | 22.1 |
| | Adsorption rate | 47.05% | 46.56% | 46.47% | 46.43% | 46.47% |

According to the above testing results, it can be seen that the adsorption rate of the chromatography media prepared by the present disclosure for the polyphenol substances is in a range from 40% to 46%, and after recovery, the chromatography media can be reused for adsorbing the polyphenol substances, a recycle loss rate is less than 1%, a recovery adsorption decrease rate is less than 2%, and cycling performance is good. In addition, the chromatography media prepared by the present disclosure is high in mechanical properties. In an XK16/40 column, a linear flow rate of the chromatography media of the present disclosure may reach 1,000 cm/h, and a pressure resistance is greater than 1 MPa.

Obviously, the above embodiments are only examples for clear explanation, not for limitation of the implementations. For those ordinarily skilled in the art, other changes or variations in different forms can further be made on the basis of the above description. It is unnecessary and impossible to enumerate all the implementations here. The obvious changes or variations arising therefrom are still within the protection scope of the present disclosure.

## Claims

1. A method for preparing chromatography media for removal of polyphenol substances, comprising:
obtaining an aqueous phase by mixing a water-soluble inorganic salt, a dispersing agent and water;
obtaining an oil phase by mixing N-vinyl pyrrolidone, a first crosslinking agent, a second crosslinking agent, a third crosslinking agent, an initiator and a pore-forming agent; and
preparing the chromatography media for the removal of the polyphenol substances by adding the oil phase into the aqueous phase for suspension polymerization; wherein
the first crosslinking agent comprises at least one of triallyl isocyanurate and N,N'-methylene bisacrylamide;
the second crosslinking agent comprises at least one of N,N'-divinyl imidazolidinone, N,N'-ethylenebisacrylamide, N,N'-divinylethyleneurea, and N,N'-divinylpropyleneurea; and
the third crosslinking agent comprises at least one of allyl methacrylate, ethylene glycol diacrylate, ethylene glycol dimethacrylate, and tetraethylene glycol diacrylate.

2. The method according to claim 1, wherein the water-soluble inorganic salt comprises at least one of sodium sulfate, sodium chloride, calcium chloride and potassium chloride;
and/or, the dispersing agent comprises at least one of gelatin, polyvinyl alcohol, carboxymethyl cellulose, hydroxypropyl methylcellulose, polyvinylpyrrolidone, and amylum.

3. The method according to claim 1 or 2, wherein the initiator comprises at least one of benzoyl peroxide, azodiisobutyronitrile, and azobisisoheptonitrile;
and/or, the pore-forming agent comprises at least one of toluene, dichloromethane, dichloroethane, butyl acetate, and ethyl acetate.

4. The method according to any one of claims 1 to 3, wherein a mass ratio of the water-soluble inorganic salt, the dispersing agent and water is (25-50):(0.1-3):100.

5. The method according to any one of claims 1 to 4, wherein a mass ratio of N-vinyl pyrrolidone, the first crosslinking agent, the second crosslinking agent, the third crosslinking agent, the initiator, and the pore-forming agent is 100:(21-36):(11-26):(3-10):(0.7-1.8):(120-125).

6. The method according to any one of claims 1 to 5, wherein a volume ratio of the aqueous phase to the oil phase is 1:(3-8).

7. The method according to any one of claims 1 to 6, wherein the suspension polymerization is carried out at a temperature ranging from 50°C to 90°C for a time period ranging from 3 hours to 10 hours.

8. The method according to any one of claims 1 to 7, wherein stirring treatment is performed after liquid stratification in the suspension polymerization;
and/or, the suspension polymerization is further followed by extraction with an extractant, water washing, and sieving treatment.

9. The method according to claim 8, wherein a stirring speed of the stirring treatment is in a range from 100 rpm/min to 500 rpm/min;
and/or, the extractant comprises at least one of methanol, ethanol, acetone, and dimethoxymethane;
and/or, a particle size of the sieving treatment is in a range from 100 µm to 3,000 µm.

10. Chromatography media for the removal of polyphenol substances, wherein the chromatography media is prepared through the method for preparing chromatography media for the removal of polyphenol substances according to any one of claims 1 to 9 above.

## Patentansprüche

1. Verfahren zum Herstellen von Chromatographiemedien zum Entfernen von Polyphenolsubstanzen, umfassend:
Erlangen einer wässrigen Phase durch Mischen eines wasserlöslichen anorganischen Salzes, eines Dispersionsmittels und Wasser;
Erlangen einer Ölphase durch Mischen von N-Vinylpyrrolidon, eines ersten Vernetzungsmittels, eines zweiten Vernetzungsmittels, eines dritten Vernetzungsmittels, eines Initiators und eines porenbildenden Mittels; und
Herstellen des Chromatographiemediums, zum Entfernen der Polyphenolsubstanzen, durch Hinzufügen der Ölphase in die wässrige Phase zur Suspensionspolymerisation; wobei
das erste Vernetzungsmittel mindestens eines von Triallylisocyanurat und N,N'-Methylenbisacrylamid umfasst;
das zweite Vernetzungsmittel mindestens eines von N,N'-Divinylimidazolidinon, N,N'-Ethylenbisacrylamid, N,N'-Divinylethylenharnstoff und N,N'-Divinylpropylenharnstoff umfasst; und
das dritte Vernetzungsmittel mindestens eines von Allylmethacrylat, Ethylenglykoldiacrylat, Ethylenglykoldimethacrylat und Tetraethylenglykoldiacrylat umfasst.

2. Verfahren nach Anspruch 1, wobei das wasserlösliche anorganische Salz mindestens eines von Natriumsulfat, Natriumchlorid, Calciumchlorid und Kaliumchlorid umfasst;
und/oder das Dispergiermittel mindestens eines von Gelatine, Polyvinylalkohol, Carboxymethylcellulose, Hydroxypropylmethylcellulose, Polyvinylpyrrolidon und Amylum umfasst.

3. Verfahren nach Anspruch 1 oder 2, wobei der Initiator mindestens eines von Benzoylperoxid, Azodiisobutyronitril und Azobisisoheptonitril umfasst;
und/oder das porenbildende Mittel mindestens eines von Toluol, Dichlormethan, Dichlorethan, Butylacetat und Ethylacetat umfasst.

4. Verfahren nach einem der Ansprüche 1 bis 3, wobei ein Massenverhältnis des wasserlöslichen anorganischen Salzes, des Dispergiermittels und des Wassers (25-50):(0,1-3):100 ist.

5. Verfahren nach einem der Ansprüche 1 bis 4, wobei ein Massenverhältnis von N-Vinylpyrrolidon, dem ersten Vernetzungsmittel, dem zweiten Vernetzungsmittel, dem dritten Vernetzungsmittel, dem Initiator und dem porenbildenden Mittel 100:(21-36):(11-26):(3-10):(0,7-1,8):(120-125) ist.

6. Verfahren nach einem der Ansprüche 1 bis 5, wobei ein Volumenverhältnis der wässrigen Phase zu der Ölphase 1:(3-8) ist.

7. Verfahren nach einem der Ansprüche 1 bis 6, wobei die Suspensionspolymerisation bei einer Temperatur in einem Bereich von 50 °C bis 90 °C über einen Zeitraum von 3 Stunden bis 10 Stunden durchgeführt wird.

8. Verfahren nach einem der Ansprüche 1 bis 7, wobei eine Rührbehandlung nach Flüssigkeitsschichtung bei der Suspensionspolymerisation durchgeführt wird;
und/oder nach der Suspensionspolymerisation eine Extraktion mit einem Extraktionsmittel, eine Wasserwäsche und eine Siebbehandlung erfolgt.

9. Verfahren nach Anspruch 8, wobei eine Rührgeschwindigkeit der Rührbehandlung in einem Bereich von 100 U/min bis 500 U/min ist;
und/oder das Extraktionsmittel mindestens eines von Methanol, Ethanol, Aceton und Dimethoxymethan umfasst;
und/oder eine Partikelgröße der Siebbehandlung in einem Bereich von 100 µm bis 3000 µm ist.

10. Chromatographiemedium zum Entfernen von Polyphenolsubstanzen, **dadurch gekennzeichnet, dass** das Chromatographiemedium durch das Verfahren zum Herstellen von Chromatographiemedien zum Entfernen von Polyphenolsubstanzen nach einem der vorherigen Ansprüche 1 bis 9 hergestellt wird.

## Revendications

1. Procédé de préparation de milieux chromatographiques pour l'élimination de substances polyphénoliques, comprenant :
obtention d'une phase aqueuse en mélangeant un sel inorganique soluble dans l'eau, un agent dispersant et de l'eau ;
obtention d'une phase huileuse en mélangeant de la N-vinylpyrrolidone, un premier agent de réticulation, un deuxième agent de réticulation, un troisième agent de réticulation, un initiateur et un agent porogène ; et
préparation du milieu chromatographique pour l'élimination des substances polyphénoliques en ajoutant la phase huileuse à la phase aqueuse pour la polymérisation en suspension ; dans lequel
le premier agent de réticulation comprend au moins l'un des éléments suivants : l'isocyanurate de triallyle et le N,N'-méthylène bisacrylamide ;
le deuxième agent de réticulation comprend au moins l'un des agents suivants : N,N'-divinylimidazolidinone, N,N'-éthylènebisacrylamide, N,N'-divinyléthylèneurée et N,N'-divinylpropylèneurée ; et
le troisième agent de réticulation comprend au moins l'un des éléments suivants : méthacrylate d'allyle, diacrylate d'éthylène glycol, diméthacrylate d'éthylène glycol et diacrylate de tétraéthylène glycol.

2. Procédé selon la revendication 1, dans lequel le sel inorganique soluble dans l'eau comprend au moins l'un des éléments suivants : sulfate de sodium, chlorure de sodium, chlorure de calcium et chlorure de potassium ;
et/ou, l'agent dispersant comprend au moins l'un des éléments suivants : gélatine, alcool polyvinylique, carboxyméthylcellulose, hydroxypropylméthylcellulose, polyvinylpyrrolidone et amidon.

3. Procédé selon la revendication 1 ou 2, dans lequel l'initiateur comprend au moins l'un des éléments suivants : peroxyde de benzoyle, azodiisobutyronitrile et azobisoheptonitrile ;
et/ou, l'agent porogène comprend au moins l'un des éléments suivants : toluène, dichlorométhane, dichloroéthane, acétate de butyle et acétate d'éthyle.

4. Procédé selon l'une quelconque des revendications 1 à 3, dans lequel un rapport de masse entre le sel inorganique soluble dans l'eau, l'agent dispersant et l'eau est de (25-50) : (0,1-3) : 100.

5. Procédé selon l'une quelconque des revendications 1 à 4, dans lequel un rapport de masse entre la N-vinylpyrrolidone, le premier agent de réticulation, le deuxième agent de réticulation, le troisième agent de réticulation, l'initiateur et l'agent porogène est de 100 : (21-36) : (11-26) :(3-10) : (0,7-1,8) : (120-125).

6. Procédé selon l'une quelconque des revendications 1 à 5, dans lequel le rapport de volume entre la phase aqueuse et la phase huileuse est de 1 : (3-8).

7. Procédé selon l'une quelconque des revendications 1 à 6, dans lequel la polymérisation en suspension est effectuée à une température allant de 50 °C à 90 °C pendant une durée allant de 3 heures à 10 heures.

8. Procédé selon l'une quelconque des revendications 1 à 7, dans lequel le traitement par agitation est effectué après la stratification du liquide dans la polymérisation en suspension ;
et/ou la polymérisation en suspension est suivie d'une extraction à l'aide d'un agent d'extraction, d'un lavage à l'eau et d'un traitement par tamisage.

9. Procédé selon la revendication 8, dans lequel la vitesse d'agitation du traitement d'agitation est comprise entre 100 tr/min et 500 tr/min ;
et/ou, l'agent d'extraction comprend au moins un des éléments suivants : méthanol, éthanol, acétone et diméthoxyméthane ;
et/ou, la taille des particules du traitement de tamisage est comprise entre 100 µm et 3 000 µm.

10. Milieu chromatographique pour l'élimination des substances polyphénoliques, dans lequel le milieu chromatographique est préparé par le procédé de préparation des milieux chromatographiques pour l'élimination des substances polyphénoliques selon l'une quelconque des revendications 1 à 9 ci-dessus.
